# EUROPEAN PATENT APPLICATION

(11) **EP 3 301 626 A1**
(43) Date of publication of application: **04.04.2018**
(21) Application number: 17193130.6
(22) Date of filing: 26.09.2017
(51) Int. Cl.: G06Q 10/08

(54) **METHOD, DEVICE, AND SYSTEM**

(30) Priority: 29.09.2016 JP 2016191895
(71) Applicant: FUJITSU LIMITED, Kanagawa 211-8588 (JP)
(72) Inventor: Matsumoto, Yasuhide, Kanagawa, 211-8588 (JP)
(74) Representative: Hoffmann Eitle

(57) **Abstract**

A method executed by a computer. The method includes, acquiring a request for a service, executing a first determination of a first service provider as a target for disclosing the request, executing a second determination of a second service provider as a target for disclosing the request, based on a result of receiving a requirement for providing the service from a first terminal corresponding to the first service provider.

## Description

### TECHNICAL FIELD

The embodiments discussed herein are related to a service requirement processing apparatus and a service requirement processing method.

### BACKGROUND ART

Conventionally, there is a system for providing a service corresponding to requirements requested by a user in response to a request from the user to use the service.

For example, a support system that selects, when receiving service request information from a customer, a service provider whose access time ratio is minimal based on positional information of the customer and positional information of the service provider has been proposed.

A technology relating to this is disclosed in Japanese Laid-open Patent Publication No. 2002-170066, for example.

### SUMMARY

### TECHNICAL PROBLEM

If a service provider is selected based on requirements such as positional information in response to a service request in a manner that is the same as or similar to the conventional technique, the demand and supply of service provision may become unbalanced.

Currently, multiple persons share a resource such as a vehicle, a vacant room, clothes, a human resource, a human ability, or funds, and sharing services for mediating borrowing and lending between persons are widely provided. In each of the sharing services, users of the sharing service and a provider of a resource to be shared independently use the sharing service, and the demand and supply of the resource may easily become unbalanced. Thus, the efficiency of using the resource may be reduced in a service providing system.

### SOLUTION TO PROBLEM

According to an aspect of the invention, a method includes, acquiring a request for a service, executing a first determination of a first service provider as a target for disclosing the request, executing a second determination of a second service provider as a target for disclosing the request, based on a result of receiving a requirement for providing the service from a first terminal corresponding to the first service provider.

### ADVANTAGEOUS EFFECTS OF INVENTION

An efficiency of using resources in a service providing system may be improved.

### BRIEF DESCRIPTION OF DRAWINGS

FIG. 1 is a block diagram illustrating a schematic configuration of a service requirement processing system according to a first embodiment;
FIG. 2 is a diagram describing an outline of a service requirement process according to the first embodiment;
FIG. 3 is a functional block diagram of a service requirement processing apparatus according to the first embodiment;
FIG. 4 is a block diagram illustrating a schematic configuration of a computer that functions as a sharing server according to the first embodiment;
FIG. 5 is a flowchart of an example of the service requirement process according to the first embodiment;
FIG. 6 is a diagram describing the collection of resource lists;
FIG. 7 is a block diagram illustrating a schematic configuration of a service requirement processing system according to a second embodiment;
FIG. 8 is a diagram describing an outline of a service requirement process according to the second embodiment;
FIG. 9 is a functional block diagram of a service requirement processing apparatus according to the second embodiment;
FIG. 10 is a block diagram illustrating a schematic configuration of a computer that functions as a provider terminal according to the second embodiment; and
FIG. 11 is a flowchart of an example of the service requirement process according to the second embodiment.

### DESCRIPTION OF EMBODIMENTS

Hereinafter, embodiments are described in detail with reference to the accompanying drawings.

### First Embodiment

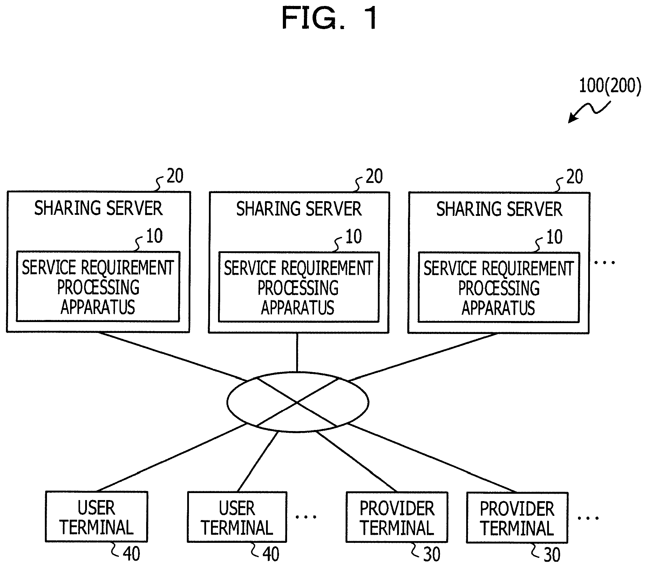

As illustrated in FIG. 1, a service requirement processing system 100 according to a first embodiment includes a plurality of sharing servers 20, a plurality of provider terminals 30, and a plurality of user terminals 40. The sharing servers 20 include service requirement processing apparatuses 10 according to the first embodiment, respectively. The sharing servers 20, the provider terminals 30, and the user terminals 40 are connected to a network such as the internet. The number of sharing servers 20, the number of provider terminals 30, and the number of user terminals 40 are not limited to an example illustrated in FIG. 1.

The sharing servers 20 are devices that provide sharing services. For example, the sharing servers 20 may be achieved by information processing devices such as server devices or personal computers. The sharing services are services for sharing resources such as vehicles, vacant rooms, clothes, human resources, human abilities, funds, and the like between multiple persons or mediating borrowing and lending between persons. For example, a certain sharing server 20 provides a service for sharing dispatched vehicles, like Uber, while another sharing server 20 provides a service for sharing accommodation. The sharing servers 20 provide the sharing services as web applications or smartphone applications on the user terminals 40.

The provider terminals 30 may be achieved by personal computers, tablet terminals, smartphones, or the like, for example. Each of the provider terminals 30 is an information processing terminal that is not used by users registered for the sharing services and is used by a service provider that provides a resource of the same type as a resource provided by any of the sharing services. As the service providers, companies that lend vacant conference rooms of buildings owned by the companies, taxi companies that provide undispatched taxies as services for providing dispatched vehicles, and the like are considered, for example. In addition, the service providers may provide resources owned by the service providers in the sharing services provided as the web applications or the smartphone applications, like the sharing servers 20. Furthermore, the service providers may use own operation methods to provide the resources owned by the service providers, regardless of the sharing services.

The user terminals 40 are information processing terminals that are used by users, each of which has been registered for any of the sharing services. The user terminals 40 may be achieved by personal computers, tablet terminals, smartphones, or the like, for example. The users of the sharing services include a user who provides a resource in a sharing service and a user (hereinafter referred to as "service user") who uses a resource. When an application for a desired sharing service is activated in a user terminal 40, the user terminal 40 accesses a sharing server 20 that provides the sharing service.

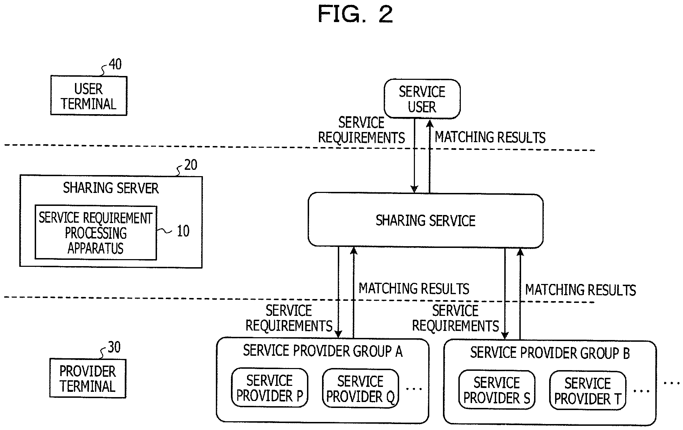

An outline of the service requirement processing system 100 according to the first embodiment is described with reference to FIG. 2. First, a sharing service receives service requirements specified by the service user. The service requirements are requirements for attributes and the like of a resource that the service user wants to use. For example, if the sharing service is a service for lending conference rooms, a date and time when a conference room is used, the location of the conference room, the size of the conference room, equipment to be used, and the like are specified as the service requirements. The sharing service transfers the received service requirements to a service provider group including one or more service providers that provide resources of the same type as a resource to be provided by the sharing service.

The service providers determine whether or not the service providers are able to provide a service corresponding to the service requirements. If a service provider is able to provide the service, the service provider sends, to the sharing service, information of the service able to be provided as matching results. The sharing service collects the matching results sent by the service provider and provides the matching results to the service user.

Specifically, in the service requirement processing system 100, the service requirements are processed while a resource is lent and borrowed between the sharing service that has received the service requirements from the service user and the other service provider.

As illustrated in FIG. 2, the service user uses a user terminal 40 to specify the service requirements, and the service providers use provider terminals 30 to receive the service requirements and send the matching results. In addition, a service requirement processing apparatus 10 included in a sharing server 20 processes the aforementioned service requirements. The service requirement processing apparatus 10 is described below in detail.

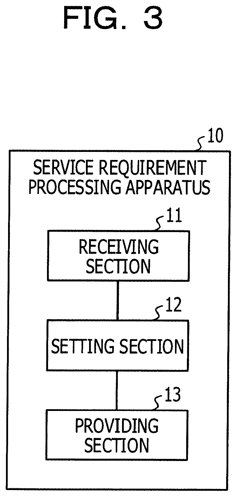

As illustrated in FIG. 3, each of the service requirement processing apparatuses 10 includes, as functional sections, a receiving section 11, a setting section 12, and a providing section 13.

The receiving section 11 receives the service requirements from the service user via the user terminal 40. The receiving section 11 passes the received service requirements to the setting section 12.

The setting section 12 sets a service provider group including one or more service providers as a disclosure target to which the service requirements sent by the receiving section 12 are to be disclosed. The setting section 12 may set a service provider group including one or more service providers as the disclosure target based on the types of services to be provided by the service providers, attributes of resources, and the like. Specifically, the setting section 12 may set, as the disclosure target, a service provider group that includes one or more service providers and provides the resources of types that are the same as or similar to the type of the resource provided by the sharing service provided by the sharing server 20 including the service requirement processing apparatus 10. In addition, the setting section 12 may set, as the disclosure target, a service provider group including one or more service providers and holding resources satisfying a part or all of the service requirements.

In the following cases, the setting section 12 newly sets, as the disclosure target, a service provider group (second service provider group) different from the service provider group (first service provider group) already set as the disclosure target. The first case is where matching results sent from a service provider included in the first service provider group indicate that the service provider is not able to provide a service corresponding to the service requirements. Hereinafter, the matching results in this case are referred to as "non-matching results". The second case is where the service user specifies the service requirements again after the providing section 13 described later provides matching results to the server user. Specifically, the second case is where matching results obtained from the first service provider group have not been used by the server user. A method for selecting the second service provider group is the same as or similar to a method for selecting the first service provider group.

The setting section 12 passes, to the providing section 13, the service requirements and information identifying the service providers included in the service provider group set as the disclosure target. The information identifying the service providers is, for example, information that is used to transfer the service requirements to the service providers and indicates identification information of the service providers, addresses of provider terminals 30 used by the service providers, and the like.

The providing section 13 transfers the service requirements to each of the provider terminals 30 used by the service providers identified based on the information received from the setting section 12. Then, the providing section 13 receives matching results from each of the provider terminals 30 to which the service requirements have been transferred.

Mails, a notification function of an application, or the like may be used for the transmission and reception of the information between the providing section 13 and the provider terminals 30. If the service providers provide sharing services using applications or the like, application programming interfaces (APIs) are provided for the sharing services of the service providers. The APIs receive the service requirements and output the matching results. The APIs are used for the transmission and reception of the information between the providing section 13 and the provider terminals 30.

As described above, the matching results indicate whether or not a resource corresponding to the service requirements is able to be provided. If matching results indicate that a resource corresponding to the service requirements is able to be provided, the matching results include information of the resource able to be provided. For example, a resource list of the resource able to be provided and attributes of the resource may be used as the information of the resource able to be provided and may be served as the matching results.

The providing section 13 collects resource lists included in the matching results received from the service providers and sorts, based on any of attributes, information of resources included in the resource lists. For example, if a usage fee is included in the attributes of the resources, the providing section 13 may sort the information of the resources in ascending order of usage fee. If a location is included in the attributes of the resources, the providing section 13 may sort the information of the resources in ascending order of distance from a location specified in the service requirements. The providing section 13 sends, as matching results, a resource list obtained by sorting the information of the resources to the user terminal 40 used by the service user. If all the service providers send non-matching results, the providing section 13 sends non-matching results to the user terminal 40 used by the service user.

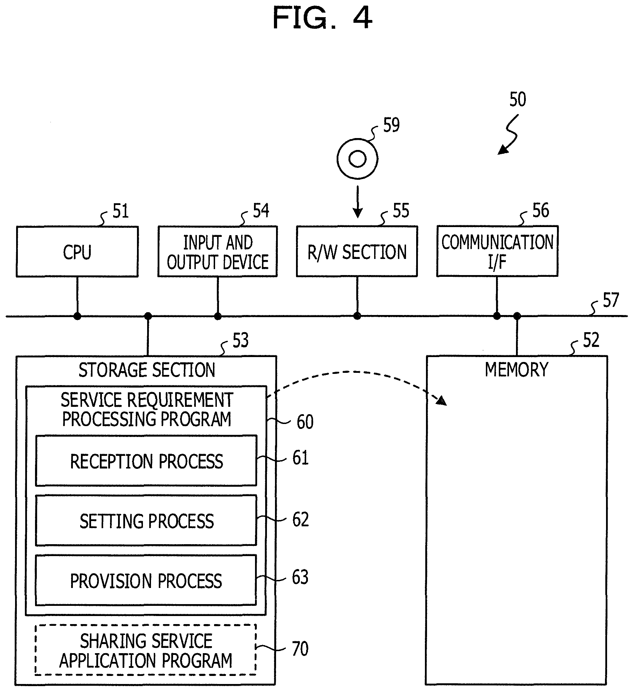

Each of the sharing servers 20 may be achieved by a computer 50 illustrated in FIG. 4, for example. The computer 50 includes a central processing unit (CPU) 51, a memory 52 serving as a transitory memory region, and a nonvolatile storage section 53. The computer 50 also includes an input and output device 54, a reading and writing (R/W) section 55 for controlling the reading and writing of data from and in a storage medium 59, and a communication interface (I/F) 56 connected to a network such as the internet. The CPU 51, the memory 52, the storage section 53, the input and output device 54, the R/W section 55, and the communication I/F 56 are connected to each other via a bus 57.

The storage section 53 may be achieved by a hard disk drive (HDD), a solid state drive (SSD), a flash memory, or the like. In the storage section 53 serving as the storage medium, a service requirement processing program 60 functioning as a service requirement processing apparatus 10 is stored. The service requirement processing program 60 includes a reception process 61, a setting process 62, and a provision process 63. In addition, in the storage section 53, a sharing service application program 70 that coordinates with the service requirement processing program 60 and causes the computer 50 to function as the sharing server 20 is stored.

The CPU 51 reads the service requirement processing program 60 from the storage section 53, loads the read service requirement processing program 60 into the memory 52, and sequentially executes the processes included in the service requirement processing program 60. The CPU 51 executes the reception process 61, thereby operating as the receiving section 11 illustrated in FIG. 3. The CPU 51 executes the setting process 62, thereby operating as the setting section 12 illustrated in FIG. 3. The CPU 51 executes the provision process 63, thereby operating as the providing section 13 illustrated in FIG. 3. The CPU 51 reads the sharing service application program 70 from the storage section 53, loads the read sharing service application program 70 into the memory 52, and sequentially executes processes included in the sharing service application program 70. Thus, the computer 50 executes the service requirement processing program 60 and the sharing service application program 70, thereby functioning as the sharing server 20. The sections that function by causing the computer 50 to execute the service requirement processing program 60 correspond to the service requirement processing apparatus 10.

The functions are achieved by the service requirement processing program 60, but may be achieved by a semiconductor integrated circuit, specifically, an application specific integrated circuit (ASIC) or the like, for example.

Next, effects of the service requirement processing system 100 according to the first embodiment are described.

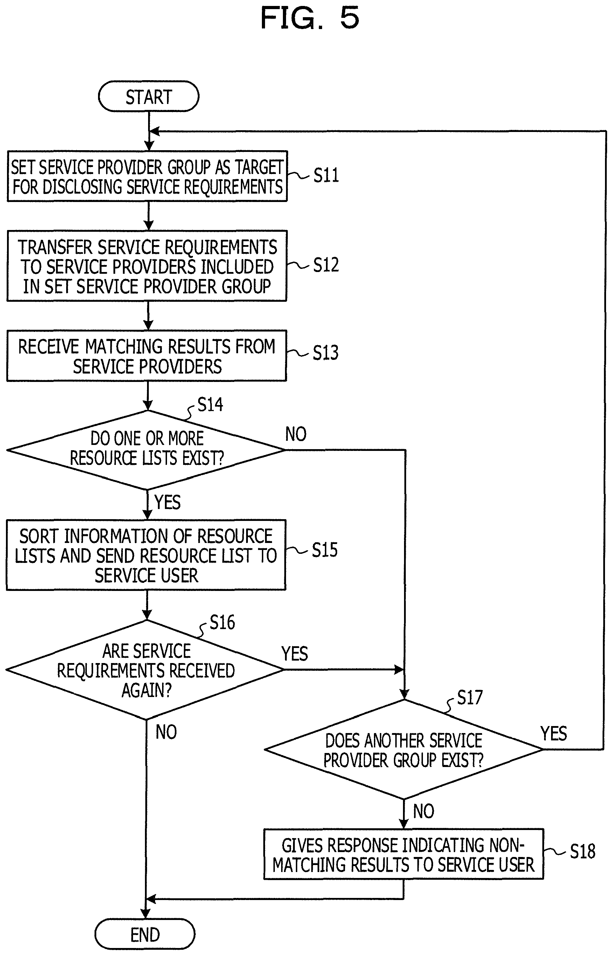

When a receiving section 11 of a service requirement processing apparatus 10 included in any of the sharing servers 20 receives service requirements specified by the service user from the user terminal 40, a service requirement process illustrated in FIG. 5 is executed in the service requirement processing apparatus 10. It is assumed that the receiving section 11 of the service requirement processing apparatus 10 included in the sharing server 20 that provides a sharing service for lending conference rooms receives the following service requirements.

A location is near Kamata Station.

A date and time are 9:00 to 12:00 on September 1, 2016.

The number of people is 10.

Equipment to be used is a projector.

In step S11, the receiving section 11 sends the received service requirements to the setting section 12. The setting section 12 sets a first service provider group including one or more service providers as a disclosure target to which the service requirements received from the receiving section 11 are to be disclosed. For example, the setting section 12 references a held table storing information of service providers, selects service providers that lend conference rooms, vacant rooms, and the like at locations near Kamata Station, and sets the selected service providers as the disclosure target to which the service requirements are to be disclosed. As illustrated in FIG. 2, it is assumed that a service provider group A including service providers P and Q is set as the disclosure target.

Next, in step S12, the setting section 12 passes, to the providing section 13, the service requirements and information identifying the service providers included in the service provider group set as the disclosure target. Then, the providing section 13 transfers the service requirements to each of the provider terminals 30 used by the service providers identified by the information passed from the setting section 12.

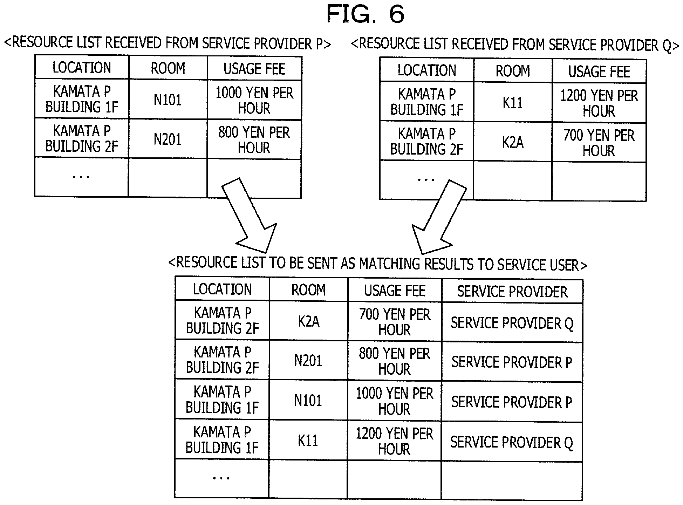

Next, in step S13, the providing section 13 receives matching results from the provider terminals 30 to which the service requirements have been transferred. In this case, it is assumed that the providing section 13 receives, from the service providers P and Q, resource lists illustrated on the upper side of FIG. 6 as the matching results.

Next, in step S14, the providing section 13 determines whether or not one or more resource lists are included in matching results received from one or more of the service providers. If the one or more resource lists are included in matching results received from the one or more of the service providers, the process proceeds to step S15. If any resource list is not included in the matching results received from the service providers, the process proceeds to step S17. In this case, the resource lists are included in the matching results received from the service providers P and Q as described above, the answer to the determination of step S14 is affirmative, and the process proceeds to step S15.

In step S15, the providing section 13 collects the resource lists included in the matching results received from the service providers and sorts information of resources included in the resource lists based on any of attributes. For example, the providing section 13 generates a resource list obtained by sorting the information of the resources included in the resource lists received from the service providers P and Q in ascending order of usage fee, as illustrated on the lower side of FIG. 6. In addition, the providing section 13 adds, to the generated resource list, information identifying the service providers that are providers of the resources. Then, the providing section 13 sends the generated resource list to the user terminal 40 that has been used by the service user to send the service requirements.

The resource list to be sent to the service user may not include the information identifying the service providers. It is sufficient if the information identifying the service providers is managed in the service requirement processing apparatus 10 in order to execute a process of notifying a resource selected by the service user from the resource list to a service provider providing the selected resource.

Next, in step S16, the receiving section 11 determines whether or not the receiving section 11 has received the service requirements again after the provision of the resource list from the providing section 13 to the service user. If the receiving section 11 has received the service requirements again, the process proceeds to step S17. If the receiving section 11 has not received the service requirements, the service requirement process is terminated.

In step S17, the setting section 12 determines whether or not another service provider group that is different from the service provider group already set as the disclosure target exists. If the other service provider group exists, the process returns to step S11, the setting section 12 newly sets the other service provider group as the disclosure target, and the processes of steps S12 to S16 are repeatedly executed. For example, as illustrated in FIG. 2, the setting section 12 may set, as the disclosure target, a service provider group B that includes service providers S and T and is different from the service provider group A already set as the disclosure target.

If the other service provider group does not exist, the process proceeds to step S18 and the providing section 13 gives a response indicating non-matching results to the service user, and the service requirement process is terminated.

As described above, according to each of the service requirement processing apparatuses according to the first embodiment, a sharing service that has received service requirements from the service user discloses the service requirements to another service provider group and receives matching results obtained based on the service requirements. In addition, the sharing service newly discloses, based on the result of receiving the matching results, the service requirements to a service provider group different from the service provider group to which the service requirements have been disclosed. Thus, a resource is lent and borrowed between the sharing service that has received the service requirements and another service provider, and the efficiency of using the resource in a service providing system may be improved. The number of resources that may be selected by the service user increases and a resource corresponding to service requirements may be easily selected by the service user. Service providers may coordinate with multiple sharing services and improve the efficiencies of using resources owned by the service providers.

### Second Embodiment

Next, a second embodiment is described. Sections that are included in a service requirement processing system according to the second embodiment and are the same as or similar to those included in the service requirement processing system 100 according to the first embodiment are indicated by the same reference numbers as those described in the first embodiment, and a detailed description thereof is omitted.

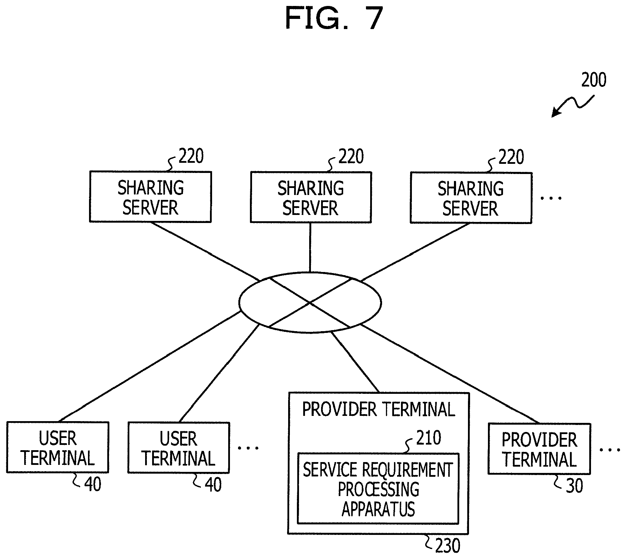

As illustrated in FIG. 7, the service requirement processing system 200 according to the second embodiment includes a plurality of sharing servers 220, a plurality of provider terminals 30 and 230, and a plurality of user terminals 40. In addition, a service requirement processing apparatus 210 is included in the provider terminal 230.

The sharing servers 220 are the same as or similar to the sharing servers 20 according to the first embodiment, except that a service requirement processing apparatus 10 is not included in each of the sharing servers 220.

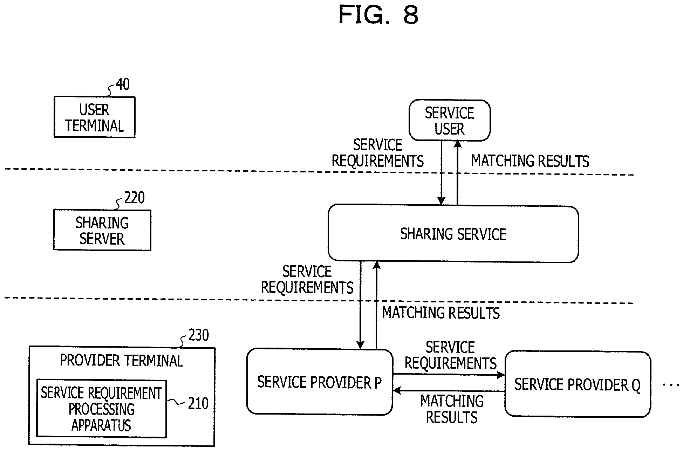

An outline of the service requirement processing system 200 according to the second embodiment is described with reference to FIG. 8. First, a sharing service receives service requirements specified by the service user and transfers the received service requirements to a service provider that provides a resource of the same type as a resource to be provided by the sharing service.

The service provider receives the service requirements and transfers the received service requirements to one or more service providers that provide resources of the same type as the resource to be provided by the sharing service. Hereinafter, the service provider to which the service requirements are initially transferred from the sharing service is referred to as "representative service provider" in order to distinguish between the service provider and the other service providers.

The representative service provider receives matching results from each of the service providers that are transfer destinations of the service requirements. The representative service provider sends and receives the information directly to and from the other service providers, but may not send and receive the information directly to and from the other service providers. The representative service provider may send and receive the information via provider terminals connected in a chain and used by the other service providers so that the representative service provider collects the matching results from the service providers.

The representative service provider collects the matching results received from the service providers and matching results obtained by the representative service provider and sends the collected matching results to the sharing service. The sharing service provides the matching results sent by the representative service provider to the service user.

Specifically, in the service requirement processing system 200, the service requirements are processed while a resource is lent and borrowed between the sharing service that has received the service requirements from the service user and another service provider, like the first embodiment.

As illustrated in FIG. 8, the service requirement processing apparatus 210 included in the provider terminal 230 executes the aforementioned service requirement process. The service requirement processing apparatus 210 is described below in detail.

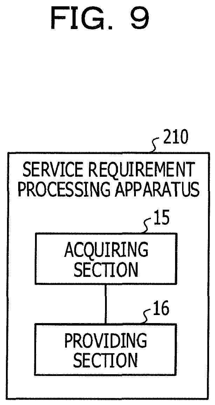

As illustrated in FIG. 9, the service requirement processing apparatus 210 includes, as functional sections, an acquiring section 15 and a providing section 16.

The acquiring section 15 acquires the service requirements transferred by the sharing service that has received the service requirements from the service user. The acquiring section 15 passes the acquired service requirements to the providing section 16.

The providing section 16 transfers the service requirements received from the acquiring section 15 to provider terminals 30 used by one or more other service providers. It is sufficient if, as the other service providers, service providers that provide resources of the same type as the resource to be provided by the representative service provider are identified.

In addition, the providing section 16 receives matching results from each of the provider terminals 30 that are transfer destinations of the service requirements. The providing section 16 collects a resource list of resources owned by the representative service provider and resource lists included in the matching results received from the service providers. Then, the providing section 16 sorts information of resources included in the resource lists based on any of attributes. In addition, the providing section 16 adds, to a resource list obtained by sorting the information of the resources, information identifying the service providers that provide the resources. The providing section 16 provides, as matching results, the resource list obtained by sorting the information to a sharing server 220 from which the service requirements have been transferred. If the matching results obtained by the representative service provider and the matching results received from the other service providers indicate non-matching results, the providing section 16 provides non-matching results to the sharing service.

The providing section 16 may or may not cause the information identifying the service providers to be included in the resource list that is to be provided to the sharing service. If a resource is selected by the service user from among the resources included in the resource list, and the sharing server 220 executes a process such as a process of notifying the selected resource to a service provider providing the selected resource, the information identifying the service providers is included in the resource list to be provided to the sharing service. If the process such as the process of notifying the selected resource to the service provider providing the selected resource is executed via the representative service provider, it is sufficient if the information identifying the service providers is managed in the service requirement processing apparatus 210, and the information identifying the service providers may not be included in the resource list to be provided to the sharing service.

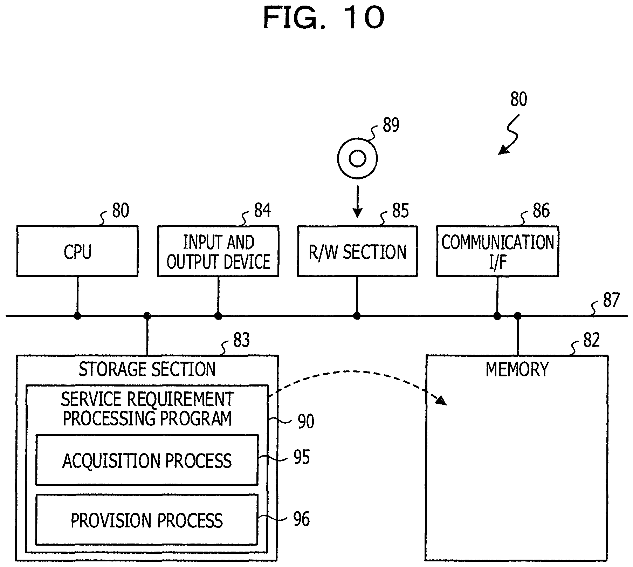

The provider terminal 230 may be achieved by a computer 80 illustrated in FIG. 10, for example. The computer 80 includes a CPU 81, a memory 82 serving as a transitory storage region, a nonvolatile storage section 83, an input and output device 84, an R/W section 85 for controlling the reading and writing of data from and in a storage medium 89, and a communication I/F 86. The CPU 81, the memory 82, the storage section 83, the input and output device 84, the R/W section 85, and the communication I/F 86 are connected to each other via a bus 87.

The storage section 83 may be achieved by an HDD, an SSD, a flash memory, or the like. In the storage section 83 serving as the storage medium, a service requirement processing program 90 that functions as the service requirement processing apparatus 210 is stored. The service requirement processing program 90 includes an acquisition process 95 and a provision process 96. In addition, in the storage section 83, a program such as another application to be used in the provider terminal 230 and information of various types are stored (but not illustrated).

The CPU 81 reads the service requirement processing program 90 from the storage section 83, loads the read service requirement processing program 90 into the memory 82, and sequentially executes the processes included in the service requirement processing program 90. The CPU 81 executes the acquisition process 95, thereby operating as the acquiring section 15 illustrated in FIG. 9. The CPU 81 executes the provision process 96, thereby operating as the providing section 16 illustrated in FIG. 9. Thus, the computer 80 executes the service requirement processing program 90, thereby functioning as the service requirement processing device 210 included in the provider terminal 230.

The functions are achieved by the service requirement processing program 90, but may be achieved by a semiconductor integrated circuit, specifically, an ASIC or the like, for example.

Next, effects of the service requirement processing system 100 according to the first embodiment are described.

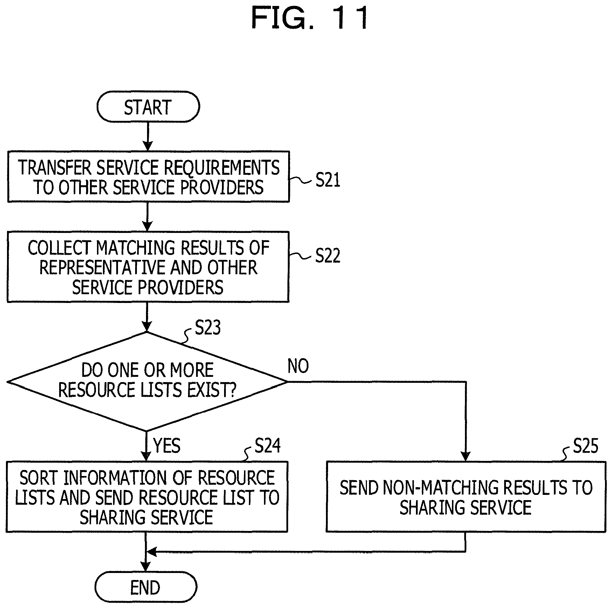

A sharing service that has received, from the user terminal 40, service requirements specified by the service user transfers the received service requirements to the representative service provider that provides resources of the same type as a resource to be provided by the sharing service, for example. When the acquiring section 15 of the service requirement processing apparatus 210 included in the provider terminal 230 used by the representative service provider acquires the service requirements transferred from the sharing service, the service requirement process illustrated in FIG. 11 is executed in the service requirement processing apparatus 210.

In step S21, the acquiring section 15 passes the acquired service requirements to the providing section 16. The providing section 16 transfers the service requirements passed from the acquiring section 15 to provider terminals 30 used by one or more other service providers.

Next, in step S22, the providing section 16 receives matching results from the provider terminals 30 that are transfer destinations of the service requirements. The providing section 16 collects the matching results received from the service providers and matching results obtained based on the resources owned by the representative service provider.

Next, in step S23, the providing section 16 determines whether or not one or more resource lists are included in matching results collected from one or more of the representative service provider and the other service providers. If the one or more resource lists are included in the matching results collected from the one or more of the representative service provider and the other service providers, the process proceeds to step S24. If any resource list is not included in the matching results collected from the representative service providers and the other service providers, the process proceeds to step S25.

In step S24, the processing section 16 collects the resource lists included in the matching results collected from the representative provider and the other service providers and sorts information of resources included in the resource lists based on any of attributes. The providing section 16 sends, as matching results, a resource list obtained by sorting the information of the resources to a sharing server 220 from which the service requirements have been transferred.

On the other hand, in step S25, the providing section 16 sends non-matching results to the sharing server 220 from which the service requirements have been transferred. Then, the service requirement process is terminated.

As described above, each of the service requirement processing apparatuses according to the second embodiment transfers service requirements transferred from a sharing service to other service providers that provides resources of the same type as a resource to be provided by the sharing service and receives matching results obtained based on the service requirements. Thus, a resource is lent and borrowed between the sharing service that has received the service requirements and another service provider, and the efficiency of using the resource may be improved in a service providing system, like the first embodiment.

The first and second embodiments describe the cases where the service requirement processing programs 60 and 90 are stored (or installed) in the storage sections 53 and 83 in advance, but are not limited to this. The programs may be stored in a storage medium such as a CD-ROM, a DVD-ROM, a USB memory, or the like and provided.

### REFERENCE SIGNS LIST

10, 210 a service requirement processing apparatus
11 a receiving section
12 a setting section
13 a providing section
15 an acquiring section
16 a providing section
20, 220 a sharing server
30, 230 a provider terminal
40 a user terminal
50, 80 a computer
51, 81 a CPU
52, 82 a memory
53, 83 a storage section
59, 89 a storage medium
60, 90 a service requirement processing program
100, 200 a service requirement processing system

## Claims

1. A method executed by a computer, the method comprising:
acquiring a request for a service;
executing a first determination of a first service provider as a target for disclosing the request;
executing a second determination of a second service provider as a target for disclosing the request, based on a result of receiving a requirement for providing the service from a first terminal corresponding to the first service provider.

2. The method according to claim 1, wherein when the result indicates that the service satisfying the request is not provided, the second determination is executed.

3. The method according to claim 1, the method further comprising, prior to executing the second determination: transmitting the result to a second terminal that has transmitted the request,
wherein when another request that is equal to the request is received from the second terminal, the second determination is executed.

4. The method according to claim 1, the method further comprising:
receiving another requirement for providing the service from a second terminal corresponding to the second service provider; and
transmitting the other requirement to a third terminal that has transmitted the request.

5. The method according to claim 1,
wherein the first determination includes determining another service provider as a target for disclosing the requirement, the other service provider having a same attribute as an attribute of the first service provider, and
wherein the second determination is executed based on the result of receiving another requirement for providing the service from a terminal corresponding to the other service provider.

6. A device comprising:
a processing unit configured to:
acquire a request for a service,
execute a first determination of a first service provider as a target for disclosing the request, and
execute a second determination of a second service provider as a target for disclosing the request, based on a result of receiving a requirement for providing the service from a first terminal corresponding to the first service provider.

7. The device according to claim 6, wherein when the result indicates that the service satisfying the request is not provided, the second determination is executed.

8. The device according to claim 6, the processing unit further configured to transmit the result to a second terminal that has transmitted the request,
wherein when another request that is equal to the request is received from the second terminal, the second determination is executed.

9. The device according to claim 6, the processing unit further configured to:
receive another requirement for providing the service from a second terminal corresponding to the second service provider, and
transmit the other requirement to a third terminal that has transmitted the request.

10. The device according to claim 6,
wherein the first determination includes determining another service provider as a target for disclosing the requirement, the other service provider having a same attribute as an attribute of the first service provider, and
wherein the second determination is executed based on the result of receiving another requirement for providing the service from a terminal corresponding to the other service provider.

11. A system comprising:
a server terminal configured to transmit a request for a service;
a first terminal corresponding to a first service provider, the first terminal being configured to receive the request from the server terminal and transmit the received request; and
a second terminal corresponding to a second service provider, the second terminal being configured to receive the request from the first terminal and transmit a service requirement related to the second service provider to the first terminal in response to the request,
wherein the first terminal transmits the received service requirement and another service requirement related to the first service provider to the server terminal.
